# EUROPÄISCHE PATENTSCHRIFT

(11) **EP 3 659 864 B1**
(45) Veröffentlichungstag und Bekanntmachung des Hinweises auf die Patenterteilung: **29.06.2022**
(21) Anmeldenummer: 19210586.4
(22) Anmeldetag: 21.11.2019
(51) Int. Cl.: B60R 3/02, B60N 2/36, B60N 2/30, B60N 2/68, B60N 2/75, B60N 3/06, B60R 7/04

(54) **FAHRZEUGSITZSTRUKTUR SOWIE FAHRZEUG MIT FAHRZEUGSITZSTRUKTUR**
VEHICLE SEAT STRUCTURE AND VEHICLE WITH VEHICLE SEAT STRUCTURE
STRUCTURE DE SIÈGE DE VÉHICULE AINSI QUE VÉHICULE POURVU DE STRUCTURE DE SIÈGE DE VÉHICULE

(30) Priorität: 29.11.2018 DE 102018220619
(43) Veröffentlichungstag der Anmeldung: 03.06.2020
(73) Patentinhaber: Sonntag transport technology GmbH & Co. KG, 57368 Lennestadt (DE)
(72) Erfinder: AHLBÄUMER, Matthias, 57368 Lennestadt (DE)
(74) Vertreter: dompatent von Kreisler Selting Werner - Partnerschaft von Patent- und Rechtsanwälten mbB

(56) Entgegenhaltungen:
- US-A1- 2006 087 154
- US-A1- 2009 014 991
- US-B2- 7 100 991
- US-B2- 7 918 508

## Beschreibung

Die vorliegende Erfindung betrifft eine Fahrzeugsitzstruktur mit einem eine Sitzfläche bildenden Sitzteil und einer Rückenlehne, wobei das Sitzteil an einer Sitzkonsole angeordnet ist, sowie ein Fahrzeug mit einer derartigen Fahrzeugsitzstruktur.

Fahrzeuge besitzen grundsätzlich Fahrzeugsitzstrukturen, die den Insassen die Möglichkeit geben, während der Fahrt zu sitzen. Üblicherweise existieren Fahrersitz, Beifahrersitz und rückwärtige Sitze in einem Fahrzeug. Die rückwärtigen Sitze können auch als Einzelsitze ausgebildet sein.

Es existieren ferner Spezialfahrzeuge, die eine Dachluke aufweisen, durch die ein Insasse im Fahrzeug stehend einen guten Rundumblick erhält. Derartige Fahrzeuge werden beispielsweise für Beobachtungen bei Tiersafaris oder auch bei der Jagd verwendet. Je nach Größe des Fahrzeugs kann der Insasse bequem seinen Kopf bzw. Kopf und Oberkörper durch die Dachluke nach außen strecken. Bei Fahrzeugen mit höherem Fahrzeugdach oder für kleinere Personen kann die Luke jedoch zu hoch angeordnet sein, um bequem den Kopf bzw. Kopf und Oberkörper aus der Dachluke herausstecken zu können.

Daher werden häufig Podeste verwendet, auf die der Insasse sich stellen kann. Derartige Podest müssen jedoch erst in das Fahrzeug hineingestellt werden und es kann vorkommen, dass die Fahrzeugsitze die Stellfläche für das Podest versperren. US 7 918 508 B2 offenbart eine Fahrzeugsitzstruktur mit den Merkmalen des Oberbegriffs des Anspruch 1, wobei die Podestvorrichtung eine Stufe für ein Kind zum Erklettern eines auf dem Sitzteil angeordneten und mit dem Sitz verankerten Kindersitzes.

Es ist daher die Aufgabe der vorliegenden Erfindung, eine Fahrzeugsitzstruktur zu schaffen, die bei der Benutzung einer Dachluke eines Fahrzeugs in vorteilhafter Weise verwendbar ist. Es ist ferner die Aufgabe der vorliegenden Erfindung, ein Fahrzeug mit einer derartigen Fahrzeugsitzstruktur zu schaffen.

Die erfindungsgemäße Fahrzeugsitzstruktur ist definiert durch die Merkmale des Anspruch 1.

Das erfindungsgemäße Fahrzeug ist definiert durch die Merkmale des Anspruchs 9.

Die erfindungsgemäße Fahrzeugsitzstruktur weist ein mindestens eine Sitzfläche bildendes Sitzteil sowie eine Rückenlehne auf. Das Sitzteil ist an einer Sitzkonsole angeordnet. Die Erfindung ist dadurch gekennzeichnet, dass unter dem Sitzteil eine Podestvorrichtung angeordnet ist, die eine Standfläche bildet, wobei die Podestvorrichtung mittels einer Führungsvorrichtung aus einer Verstauposition, in der die Podestvorrichtung unter dem Sitzteil angeordnet ist, in eine Gebrauchsposition verschiebbar ist.

Bei der erfindungsgemäßen Fahrzeugsitzstruktur ist somit eine Podestvorrichtung, die in vorteilhafter Weise mit einer Dachluke verwendet werden kann, unterhalb des Sitzteils angeordnet und kann unter dem Sitzteil hervorgezogen und in eine Gebrauchsposition gebracht werden. Dabei wird die Podestvorrichtung von einer Führungsvorrichtung geführt. Die Podestvorrichtung kann somit sehr schnell in die Gebrauchsposition gebracht werden und es ist nicht notwendig, diese separat aufzustellen. Da die Podestvorrichtung in der Verstauposition sich unterhalb des Sitzteils befindet, nimmt die Podestvorrichtung nicht unnötig Stauraum im Fahrzeug ein, da der Raum unterhalb des Sitzteils üblicherweise nur selten genutzt ist.

Die Fahrzeugsitzstruktur kann beispielsweise in Fahrtrichtung angeordnet sein. Dabei kann die Hauptsitzrichtung gleich der Fahrtrichtung sein. Unter Hauptsitzrichtung wird im Rahmen der Erfindung die Richtung verstanden, in die ein Insasse beim Sitzen auf der Sitzfläche der erfindungsgemäßen Fahrzeugsitzstruktur und Anlehen mit dem Rücken an die Rückenlehne blickt.

Erfindungsgemäß ist vorgesehen, dass das Sitzteil gelenkig mit der Sitzkonsole verbunden ist und von einer Gebrauchsposition in eine Klappposition, in der die Sitzfläche zu der Rückenlehne gewandt angeordnet ist, klappbar ist. Mit anderen Worten: Die Fahrzeugsitzstruktur kann als Klappsitz ausgebildet sein, bei dem das Sitzteil nach oben wegklappbar ist. Auf diese Weise lässt sich die Podestvorrichtung in besonders vorteilhafter Weise bedienen, da nach dem Hochklappen des Sitzteils die Podestvorrichtung in ihrer Verstauposition in vorteilhafter Weise zum Herausziehen erreichbar ist.

Darüber hinaus wird durch die klappbare Ausgestaltung des Sitzteils in der Klappposition des Sitzteils Platz geschaffen, so dass die Podestvorrichtung nur einen kurzen Weg aus der Verstauposition herausgezogen werden muss, um in Gebrauch genommen zu werden.

Vorzugsweise ist vorgesehen, dass die Führungsvorrichtung mindestens eine Schiene aufweist, wobei die Podestvorrichtung auf der mindestens einen Schiene zum Verschieben geführt ist. Es kann auch vorgesehen sein, dass die Führungsvorrichtung zwei parallele Schienen aufweist, auf der die Podestvorrichtung geführt ist. Das Vorsehen einer Führungsvorrichtung mit Schiene ermöglicht auf konstruktive einfache Art und Weise eine Führung der Podestvorrichtung, mittels der die Podestvorrichtung verschoben werden kann. Darüber hinaus lässt sich über eine Schienenvorrichtung die Podestvorrichtung in vorteilhafter Weise an dem Fahrzeugboden haltern. Beispielsweise kann die mindestens eine Schiene eine nutenförmige Vertiefung mit Hinterschneidung, beispielsweise eine T-förmige Nut, aufweisen, in der mit der Podestvorrichtung verbundene Gleitsteine verschoben werden können. Über diese Gleitsteine kann die Podestvorrichtung auch in vorteilhafter Weise in der Verstauposition oder der Gebrauchsposition klemmend fixiert werden, so dass die Podestvorrichtung während der Fahrt mit dem Fahrzeug gesichert ist.

Insbesondere kann vorgesehen sein, dass die mindestens eine Schiene parallel zu der Hauptsitzrichtung angeordnet ist.

Bei Fahrzeugen, bei denen die Hauptsitzrichtung in Fahrtrichtung ist, lässt sich die Podestvorrichtung somit beispielsweise in Fahrtrichtung nach vorne verschieben, um in die Gebrauchsposition zu gelangen.

Es kann auch vorgesehen sein, dass die Rückenlehen gelenkig mit der Sitzkonsole verbunden ist und von einer Gebrauchsposition in eine Klappposition, in der die Rückenlehne auf dem in der Gebrauchsposition angeordneten Sitzteil liegt, klappbar ist. Mit anderen Worten: Bei heruntergeklapptem Sitzteil kann die Rückenlehne auf das Sitzteil geklappt werden, so dass bei Nichtgebrauch der Fahrzeugsitzstruktur beispielsweise Ladefläche geschaffen werden kann.

Vorzugsweise ist vorgesehen, dass die Podestvorrichtung eine Höhenverstellvorrichtung aufweist. Über die Höhenverstellvorrichtung lässt sich die Standfläche der Podestvorrichtung in ihrer Höhe verstellen und somit beispielsweise an die Fahrzeugdachhöhe oder die Größe des Insassen anpassen.

In einer bevorzugten Ausführungsform der Erfindung ist vorgesehen, dass die Sitzkonsole einen Aufnahmeraum bildet, in dem die Podestvorrichtung in der Verstauposition zumindest teilweise angeordnet ist. Die Podestvorrichtung kann somit teilweise in dem Aufnahmeraum der Sitzkonsole und teilweise unterhalb des in der Gebrauchsposition angeordneten Sitzteils angeordnet sein.

Vorzugsweise ist vorgesehen, dass die Standfläche der Podestvorrichtung zumindest teilweise eine rutschhemmende Oberfläche aufweist. Dadurch kann der Insasse beim Stehen auf der Podestvorrichtung einen sicheren Stand einnehmen, was insbesondere während der Fahrt von Vorteil ist.

An der Rückenlehne der erfindungsgemäßen Fahrzeugsitzstruktur kann seitlich mindestens eine Armlehne angeordnet sein. Diese bietet dem Insassen während des Sitzens auf der erfindungsgemäßen Fahrzeugsitzstruktur die Möglichkeit, eine angenehme Sitzposition einzunehmen. Die Armlehne kann beispielsweise hochklappbar sein, so dass sie im Wesentlichen parallel zu der Rückenlehne verläuft. Dadurch wird beispielsweise das Einsteigen und Hinsetzen auf die erfindungsgemäße Fahrzeugsitzstruktur auf einfache Art und Weise ermöglicht.

Die Erfindung betrifft ferner ein Fahrzeug mit einer erfindungsgemäßen Fahrzeugsitzstruktur. Dabei kann vorgesehen sein, dass das Fahrzeug ein Fahrzeugdach mit einer Dachluke aufweist, wobei die Position der Dachluke an die Gebrauchsposition der Podestvorrichtung angepasst ist. Mit anderen Worten: Position der Dachluke und der Podestvorrichtung sind derart aneinander angepasst, dass beim Stehen auf der Podestvorrichtung ein Insasse seinen Kopf bzw. Kopf und Oberkörper durch die Dachluke ins Freie stecken kann.

Nachfolgend wird die Erfindung unter Bezugnahme auf die Figuren näher erläutert.

Es zeigen
- Fig. 1: die erfindungsgemäße Fahrzeugsitzstruktur mit Podestvorrichtung in Ver-stauposition und Sitzteil in Gebrauchsposition,
- Fig. 2: die Fahrzeugsitzstruktur der Fig. 1 mit Podestvorrichtung in Gebrauchs-position und Sitzteil in Klappposition und
- Fig. 3: eine mit der Fig. 2 vergleichbare Darstellung der Fahrzeugsitzstruktur, bei der die Podestvorrichtung in der Höhe verstellt ist.

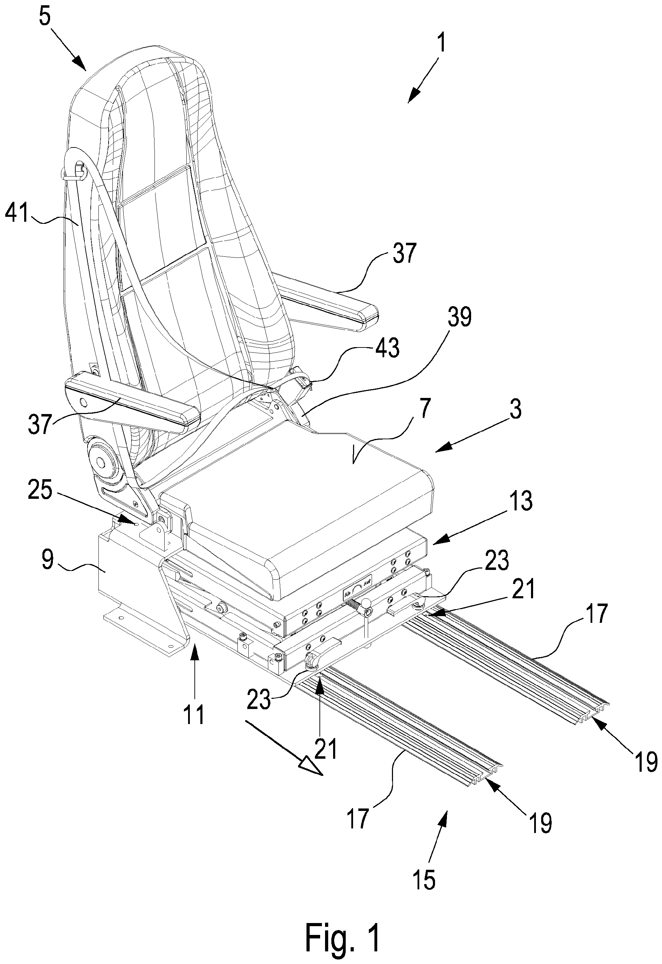

In Fig. 1 ist eine erfindungsgemäße Fahrzeugsitzstruktur 1 schematisch in einer perspektivischen Darstellung gezeigt.

Die Fahrzeugsitzstruktur 1 weist ein Sitzteil 3 und eine Rückenlehne 5 auf. Das Sitzteil 3 bildet eine Sitzfläche 7. Das Sitzteil 3 und die Rückenlehne 5 sind an einer Sitzkonsole 9 befestigt. Die Sitzkonsole 9 ist fest mit einem Fahrzeugboden verbunden. Grundsätzlich kann jedoch auch vorgesehen sein, dass die Sitzkonsole zumindest teilweise verstellbar auf dem Boden befestigt ist.

Die Sitzkonsole 9 bildet einen Aufnahmeraum 11, in dem eine Podestvorrichtung 13 teilweise angeordnet ist. Die Podestvorrichtung 13 befindet sich ferner unter dem Sitzteil 3 in der in Fig. 1 dargestellten Gebrauchsposition des Sitzteils 3.

Die Podestvorrichtung 13 ist auf einer Führungsvorrichtung 15, die aus zwei Schienen 17 besteht, angeordnet. Die Schienen 17 sind an dem Innenraumboden des Fahrzeugs angeordnet und können beispielsweise in diesen eingelassen sein.

Die Schienen 17 verlaufen parallel zur Hauptsitzrichtung, die in Fig. 1 über einen Pfeil dargestellt ist.

Die Schienen 17 weisen jeweils eine T-förmige Nut 19, in der die Podestvorrichtung 13 über Gleitsteine 21 geführt ist. Die Gleitsteine 21 können jeweils mittels eines Klemmhebels 23 gelöst werden, so dass die Podestvorrichtung 13 entlang der Schienen 17 verschoben werden kann. Mittels der Klemmhebel 23 kann dann die Podestvorrichtung 13 in einer anderen Position auf den Schienen 17 fixiert werden.

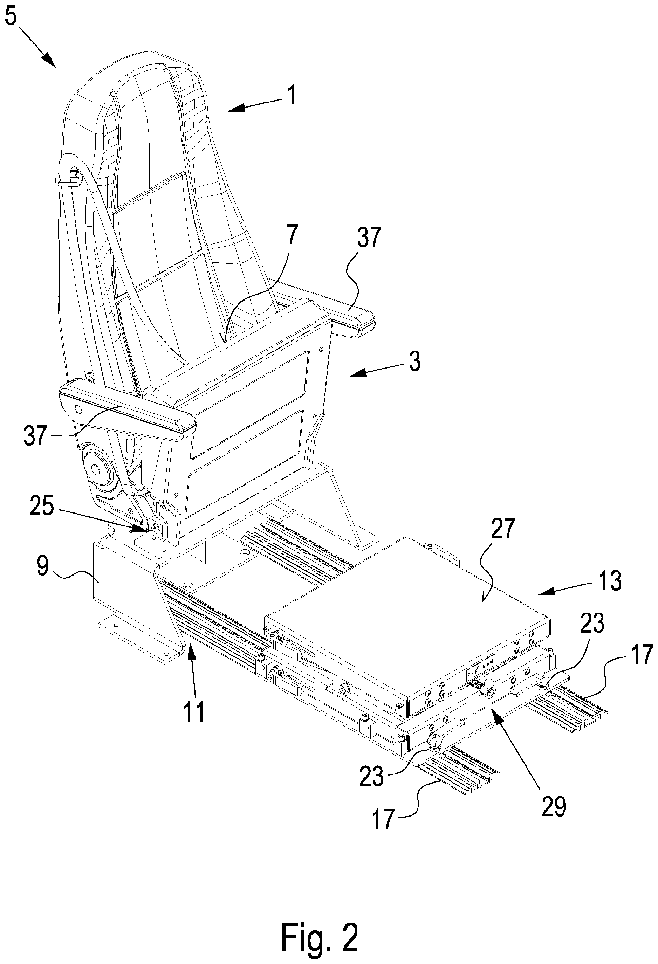

Zur besseren Erreichbarkeit während des Verschiebens der Podestvorrichtung 13 kann das Sitzteil 3 aus der in Fig. 1 dargestellten Gebrauchsposition in die in Fig. 2 dargestellte Klappposition gebracht werden. Dazu ist das Sitzteil 3 über ein Gelenk 25 mit der Sitzkonsole 9 verbunden. In der in Fig. 2 dargestellten Klappposition ist die Sitzfläche 7 zu der Rückenlehne 5 gewandt.

Die Podestvorrichtung 13 ist in dem in Fig. 2 dargestellten Ausführungsbeispiel in ihre Gebrauchsposition verschoben worden. Wie aus Fig. 2 hervorgeht, bildet die Podestvorrichtung 13 eine Standfläche 27, auf der ein Insasse stehen kann, um beispielsweise seinen Kopf und/oder Kopf und Oberkörper durch eine oberhalb der Podestvorrichtung 13 angeordnete Dachluke stecken zu können. Dadurch, dass das Sitzteil 3 in seine in Fig. 2 gezeigte Klappposition hochklappbar ist, kann der Insasse bequem die Podestvorrichtung nutzen, ohne dass das Sitzteil 3 stört.

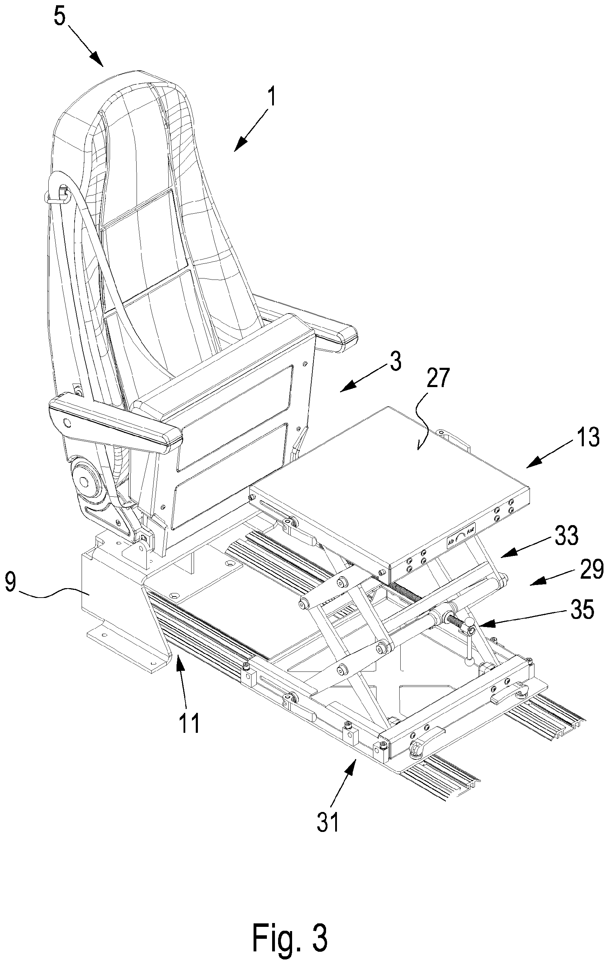

In Fig. 3 ist die erfindungsgemäße Fahrzeugsitzstruktur im Wesentlichen in der gleichen Position wie in Fig. 2 dargestellt. Wie aus Fig. 3 hervorgeht, weist die Podestvorrichtung 13 eine Höhenverstellvorrichtung 29 auf. Über die Höhenverstellvorrichtung 29 kann die Standfläche 27 gegenüber einer Basis 31 der Podestvorrichtung 13 in vertikaler Richtung verstellt werden. Dazu weist die Höhenverstellvorrichtung 29 Scherengelenke 33 auf, die über eine Betätigungsvorrichtung 35 betätigbar sind. Die Betätigungsvorrichtung 35 weist eine Gewindestange auf, die durch Drehen die Höhenverstellung bewirkt.

Durch das Vorsehen einer Höhenverstellvorrichtung 29 bei der erfindungsgemäßen Podestvorrichtung 13 lässt sich die Podestvorrichtung 13 an beispielsweise die Fahrzeughöhe oder die Größe eines Insassen anpassen, so dass der Insasse bequem aus der Dachluke herausschauen kann.

Die Standfläche 27 kann zumindest teilweise eine rutschhemmende Oberfläche aufweisen, so dass der auf der Podestvorrichtung 13 stehende Insasse einen festen Stand hat.

Die Rückenlehne 5 kann seitlich klappbare Armlehnen 37 aufweisen, die dem Insassen beim Sitzen auf der Sitzfläche 7 eine bequeme Sitzposition ermöglichen. Durch das Hochklappen der Armlehnen 37 kann darüber hinaus ein Hinsetzen vereinfacht werden.

Die Rückenlehne 5 kann ebenfalls klappbar ausgestaltet sein. Hierzu ist die Rückenlehne 5 über eine Halterung 39, die ein Gelenk für die Rückenlehne 5 bildet, mit der Sitzkonsole 9 verbunden. Ferner ist an der Rückenlehne 5 ein Gurt 41 angeordnet. Das dazugehörige Gurtschloss 43 ist an der Halterung 39 befestigt.

Nach Gebrauch der Podestvorrichtung 13 kann diese wieder bequem in die in Fig. 1 gezeigte Verstauposition verbracht werden, so dass die erfindungsgemäße Fahrzeugsitzstruktur 1 wieder als normaler Sitz verwendbar ist.

## Patentansprüche

1. Fahrzeugsitzstruktur (1) mit einem mindestens eine Sitzfläche (7) bildenden Sitzteil (3) und einer Rückenlehne (5), wobei das Sitzteil (3) an einer Sitzkonsole (9) angeordnet ist, wobei
unter dem Sitzteil (3) eine Podestvorrichtung (13), die eine Standfläche (27) bildet, angeordnet ist, wobei die Podestvorrichtung (13) mittels einer Führungsvorrichtung (15) aus einer Verstauposition, in der die Podestvorrichtung (13) unter dem Sitzteil (3) angeordnet ist, in eine Gebrauchsposition verschiebbar ist
**dadurch gekennzeichnet, dass**
das Sitzteil (3) gelenkig mit der Sitzkonsole (9) verbunden ist und von einer Gebrauchsposition zur Bedienung der Podestvorrichtung in eine Klappposition, in der die Sitzfläche (7) zu der Rückenlehne (5) gewandt angeordnet ist, klappbar ist.

2. Fahrzeugsitzstruktur nach Anspruch 1, **dadurch gekennzeichnet, dass** die Führungsvorrichtung (15) mindestens eine Schiene (17) aufweist, wobei die Podestvorrichtung (13) auf der mindestens einen Schiene (17) zum Verschieben geführt ist.

3. Fahrzeugsitzstruktur nach Anspruch 2, **dadurch gekennzeichnet, dass** die mindestens eine Schiene (17) parallel zu einer Hauptsitzrichtung angeordnet ist.

4. Fahrzeugsitzstruktur nach einem der Ansprüche 1 bis 3, **dadurch gekennzeichnet, dass** die Rückenlehne (5) gelenkig mit der Sitzkonsole (9) verbunden ist und von einer Gebrauchsposition in eine Klappposition, in der Rückenlehne (5) auf dem in der Gebrauchsposition angeordneten Sitzteil (3) liegt, klappbar ist.

5. Fahrzeugsitzstruktur nach einem der Ansprüche 1 bis 4, **dadurch gekennzeichnet, dass** die Podestvorrichtung (13) eine Höhenverstellvorrichtung (29) aufweist.

6. Fahrzeugsitzstruktur nach einem der Ansprüche 1 bis 5, **dadurch gekennzeichnet, dass** die Sitzkonsole (9) einen Aufnahmeraum (11) bildet, in dem die Podestvorrichtung (13) in der Verstauposition zumindest teilweise angeordnet ist.

7. Fahrzeugsitzstruktur nach einem der Ansprüche 1 bis 6, **dadurch gekennzeichnet, dass** die Standfläche (27) der Podestvorrichtung (13) zumindest teilweise eine rutschhemmende Oberfläche aufweist.

8. Fahrzeugsitzstruktur nach einem der Ansprüche 1 bis 7, **dadurch gekennzeichnet, dass** mindestens eine Armlehne (37) seitlich an der Rückenlehne (5) angeordnet ist.

9. Fahrzeug mit einer Fahrzeugsitzstruktur (1) nach einem der Ansprüche 1 bis 8.

10. Fahrzeug nach Anspruch 9, **gekennzeichnet durch** ein Fahrzeugdach mit einer Dachluke, wobei die Position der Dachluke an die Gebrauchsposition der Podestvorrichtung (13) angepasst ist.

## Claims

1. A vehicle seat structure (1) comprising a seat part (3) forming at least one seat surface (7), and a backrest (5), wherein the seat part (3) is arranged on a seat console (9), wherein
a platform device (13) forming a standing surface (27) is arranged under the seat part (3), the platform device (13) being slidable, by means of a guide device (15), from a storage position in which the platform device (13) is arranged under the seat part (3) to a use position,
**characterized in that**
the seat part (3) is articulately connected to the seat console (9) and is foldable, for operating the platform device, from a use position to a folded position in which the seat surface (7) is arranged facing the backrest (5).

2. The vehicle seat structure according to claim 1, **characterized in that** the guide device (15) comprises at least one rail (17), the platform device (13) being guided for slidable displacement on the at least one rail (17).

3. The vehicle seat structure according to claim 2, **characterized in that** the at least one rail (17) is arranged parallel to a main sitting direction.

4. The vehicle seat structure according to one of claims 1 to 3, **characterized in that** the backrest (5) is articulately connected to the seat console (9) and is foldable from a use position to a folded position in which the backrest (5) rests on the seat part (3) arranged in the use position.

5. The vehicle seat structure according to one of claims 1 to 4, **characterized in that** the platform device (13) comprises a height adjustment device (29).

6. The vehicle seat structure according to one of claims 1 to 5, **characterized in that** the seat console (9) forms an accommodation space (11) in which the platform device (13) is arranged at least in part when in the storage position.

7. The vehicle seat structure according to one of claims 1 to 6, **characterized in that** the standing surface (27) of the platform surface (13) at least partly comprises a non-slip surface.

8. The vehicle seat structure according to one of claims 1 to 7, **characterized in that** at least one arm rest (37) is arranged laterally at the backrest (5).

9. A vehicle comprising a vehicle seat structure (1) according to one of claims 1 to 8.

10. The vehicle according to claim 9, **characterized by** a vehicle roof with a roof hatch, the position of the roof hatch being adapted to the use position of the platform device (13).

## Revendications

1. Structure de siège de véhicule (1) dotée d'une partie d'assise (3) formant au moins une surface d'assise (7) et d'un dossier (5), dans laquelle la partie d'assise (3) est disposée sur une console de siège (9), dans laquelle
un dispositif d'estrade (13), lequel forme une surface d'appui (27), est disposé sous la partie d'assise (3), dans laquelle le dispositif d'estrade (13) peut coulisser depuis une position escamotée, où le dispositif d'estrade (13) est disposé sous la partie d'assise (3), vers une position d'utilisation au moyen d'un dispositif de guidage (15)
**caractérisée en ce que**
la partie d'assise (3) est reliée à la console de siège (9) de manière articulée et peut être repliée depuis une position d'utilisation destinée au fonctionnement du dispositif d'estrade vers une position repliée, où la surface d'assise (7) est disposée contre le dossier (5).

2. Structure de siège de véhicule selon la revendication 1, **caractérisée en ce que** le dispositif de guidage (15) comporte au moins un rail (17), dans laquelle le dispositif d'estrade (13) est guidé sur l'au moins un rail (17) pour le coulissement.

3. Structure de siège de véhicule selon la revendication 2, **caractérisée en ce que** l'au moins un rail (17) est disposé parallèlement à une direction d'assise principale.

4. Structure de siège de véhicule selon l'une des revendications 1 à 3, **caractérisée en ce que** le dossier (5) est relié de manière articulée à la console de siège (9) et peut être replié depuis une position d'utilisation vers une position repliée, où le dossier (5) repose sur la partie d'assise (3) disposée en position d'utilisation.

5. Structure de siège de véhicule selon l'une des revendications 1 à 4, **caractérisée en ce que** le dispositif d'estrade (13) comporte un dispositif de réglage de hauteur (29).

6. Structure de siège de véhicule selon l'une des revendications 1 à 5, **caractérisée en ce que** la console de siège (9) forme un espace de logement (11), à l'intérieur duquel, dans la position escamotée, le dispositif d'estrade (13) est disposé au moins en partie.

7. Structure de siège de véhicule selon l'une des revendications 1 à 6, **caractérisée en ce que** la surface d'appui (27) du dispositif d'estrade (13) comporte au moins en partie une surface antidérapante.

8. Structure de siège de véhicule selon l'une des revendications 1 à 7, **caractérisée en ce qu'**au moins un accoudoir (37) est disposé latéralement sur le dossier (5) .

9. Véhicule doté d'une structure de siège de véhicule (1) selon l'une des revendications 1 à 8.

10. Véhicule selon la revendication 9, **caractérisé par** un toit de véhicule doté d'une trappe de toit, dans lequel la position de la trappe de toit est adaptée à la position d'utilisation du dispositif d'estrade (13).
